(19) Europäisches Patentamt

European Patent Office

Office européen des brevets

(11) **EP 0 929 194 B1**

(12) **EUROPEAN PATENT SPECIFICATION**

(45) Date of publication and mention
of the grant of the patent:
**28.04.2004 Bulletin 2004/18**

(51) Int Cl.7: **H04N 5/14**

(21) Application number: **99300152.8**

(22) Date of filing: **08.01.1999**

(54) **Motion detection**

Bewegungsdetektion

Détection de mouvement

(84) Designated Contracting States:
**DE FR GB**

(30) Priority: **09.01.1998 US 4935**

(43) Date of publication of application:
**14.07.1999 Bulletin 1999/28**

(73) Proprietors:
• **Hewlett-Packard Company (a Delaware corporation)**
**Palo Alto, CA 94304 (US)**
• **Agilent Technologies, Inc. (a Delaware corporation)**
**Palo Alto, CA 94303 (US)**

(72) Inventors:
• **Tullis, Barclay J.**
**Palo Alto CA 94303 (US)**
• **Blalock, Travis N.**
**Santa Clara, CA 95051 (US)**
• **Beard, David**
**Palo Alto, CA 94306 (US)**

(74) Representative: **Powell, Stephen David et al**
**WILLIAMS POWELL**
**Morley House**
**26-30 Holborn Viaduct**
**London EC1A 2BP (GB)**

(56) References cited:
**US-A- 5 089 887        US-A- 5 400 087**
**US-A- 5 526 053        US-A- 5 535 288**

**Description**

The present invention pertains to the field of imaging. More particularly, this invention relates to motion tracking using sub-framing of sampled image frames.

Imaging systems including image scanners and digital video cameras typically include mechanisms for obtaining digital samples of an image scene. Typically, the digital samples of an image scene are arranged as a series of image frames. Each image frame typically includes an array of pixel data values sampled from the image scene.

It is often useful in an imaging system to determine a spatial relationship between image frames sampled from the image scene. The determination of a spatial relationships between image frames may be useful, for example, in tracking the relative motion of an image scanner with respect to the image scene being scanned. In addition, the determination of spatial relationships between image frames in a video imaging system may be useful for estimating the relative motion of objects contained in the image scene.

A typical prior technique for determining a spatial relationship between a pair of image frames is to calculate correlation metrics using the pixel data values from the image frames. A correlation metric is usually employed to extract an indication of the differences in image content between the image frames. For example, one such correlation metric is the sum of absolute differences between corresponding pixel data values contained in the image frames.

In a typical imaging system, the successive image frames sampled from the image scene are offset from one another in either one dimension or in two dimensions. Such offsets may occur, for example, as an imaging device moves with respect to an image scene being scanned. As a consequence, a pair of successive image frames commonly include areas of overlapping image content and areas of non-overlapping image content. Unfortunately, the pixel data values from the non-overlapping areas usually introduce errors into a correlation metric. Such errors can reduce the accuracy of motion tracking or motion estimation in the imaging system.

US-A-5,526,053 discloses motion compensated video signal processing apparatus which detects motion and assigns motion vectors.

US-A-5,535,288 also discloses motion vector determination in image processing and video motion estimation, but without excluding content.

US-A-5,400,087 discloses a motion vector detector involving interpolation detection.

According to a first aspect of the present invention, there is provided a method for motion detection according to claim 1.

According to a second aspect of the present invention, there is provided an apparatus for motion detection according to claim 8.

In embodiments of the invention, an imaging system employs sub-framing of sampled image frames to improve accuracy of motion detection. The system includes an imaging array for generating sampled image frames containing pixel data values from an image scene. The system performs sub-framing by calculating a correlation metric for each of a set of possible spatial relationships between the image frames using the pixel data values from areas of the image frames that contain overlapping content. The correlation metrics based on overlapping image content enable accurate motion detection in the imaging system.

Other features and advantages of the present invention will be apparent from the detailed description that follows.

The present invention is described with respect to particular exemplary embodiments thereof and reference is accordingly made to the drawings in which:

   **Figure 1** shows an imaging system which includes elements for sub-framing sampled image frames to improve the accuracy of motion detection;

   **Figure 2** shows a pair of successive image frames which are sampled by an imaging array as it moves with respect to an image scene;

   **Figure 3** illustrates a sub-frame operation on the image frames in one embodiment;

   **Figure 4** shows an imaging system which includes elements that employ motion estimation in sub-framing operations;

   **Figures 5a-5h** show a variety of spatial relationships between the image frames as may be indicated by a motion estimate rendered by a motion estimator.

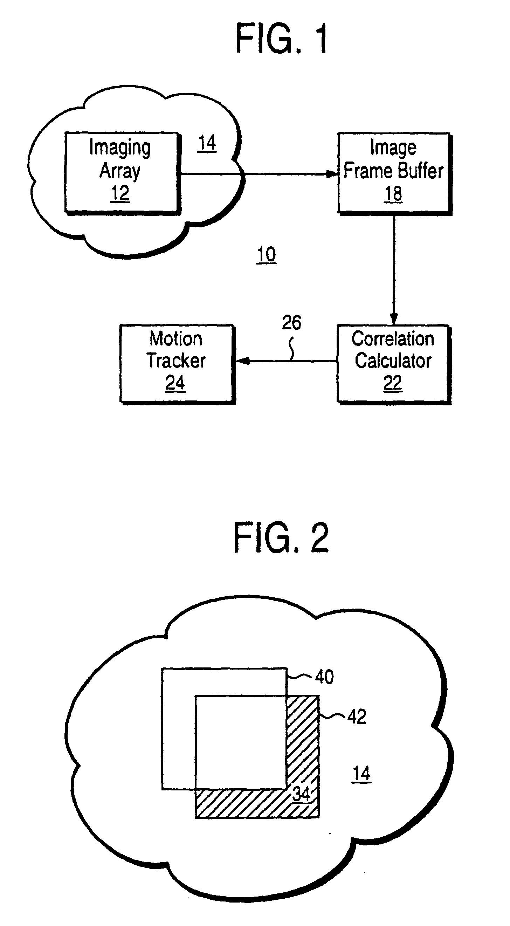

**Figure 1** shows an imaging system 10 which includes elements for accurate motion detection by sub-framing image frames sampled from an image scene 14. The elements for accurate motion detection in one embodiment include an imaging array 12, an image frame buffer 18, a correlation calculator 22 and a motion tracker 24. These elements may be implemented in a combination of hardware and software including, for example, an embedded processor and memory in the imaging system 10.

The imaging array 12 is shown positioned to sample an image scene 14. The imaging array 12 includes an array of photosensitive elements each of which generates a corresponding pixel data sample of the image scene 14. The pixel data samples generated by the imaging array 12 are assembled into image frames and stored in an image frame buffer 18. The image frame buffer 18 in one embodiment has the capacity to store multiple image frames sampled from the image scene 14.

In one embodiment, the imaging system 10 is a handheld scanner and the imaging array 12 moves over the image scene 14 as a user moves the image scanner over the image scene 14. In this embodiment, the imaging array 12 is used for motion tracking while a separate imaging array is used to scan the image scene 14.

**Figure 2** shows a pair of successive image frames 40-42 which are sampled by the imaging array 12 as it moves with respect to the image scene 14. Each image frame 40-42 is an array of N by M digital pixel data values. A shaded area 34 of the image frame 42 represents an area of the image frame 42 that does not overlap the image content of the image frame 40 owing to the movement of the imaging array 12 with respect to the image scene 14.

The process of tracking the motion of the imaging array 12 with respect to the image scene 14 includes the determination of correlations between the image content of the image frames 40 and 42. This determination is performed by the correlation calculator 22. The pixel data values from the non-overlapping area 34 would introduce errors into this correlation determination because those pixel data values correspond to a portion of the image scene 14 that is not included in the image frame 40. Therefore, the correlation calculator 22 eliminates or minimizes the contribution of the pixel data values in the area 34 when determining correlations between the image content of the image frames 40-42.

The correlation calculator 22 obtains the image frames 40-42 from the image frame buffer 18 and generates a set of correlation metrics 26. The correlation metrics 26 include a correlation metric for each of a set of possible spatial relationships between the image frames 40-42. The possible spatial relationships between the image frames 40-42 are specified by a pair of lag values lx and ly. The lag values lx and ly can be viewed as relative image displacements corresponding to the x and y directions, respectively, of the image frames 40 and 42. The lag values lx lie within a range of -N to +N and the lag values ly lie within a range of -M to +M.

The motion tracker 24 uses the correlation metrics 26 to determine an actual relative spatial offset between the image frames 40-42. The motion tracker 24 also maintains a history of the actual spatial offsets between successive image frames from the imaging array 12 as the imaging array 12 moves with respect to the image scene 14.

The correlation calculator 22 performs a sub-framing operation on the image frames 40-42 to reduce or eliminate the contribution of the pixels in the area 34 from contributing to the correlation metrics 26. This sub-framing operation is intended to improve the accuracy of the correlation metrics 26 and in turn improve the accuracy of the motion tracking performed by the motion tracker 24.

Without sub-framing, the following equation, which may be referred to as a square root of sum of squared differences equation, may be used to determine the correlation metrics 26;

$$C_{lx, ly} = \sqrt{\sum_{i=1}^{N} \sum_{j=1}^{M} (p_{i,j} - q_{i-lx, j-ly})^2}$$

where p is a pixel data value from the image frame 40 and q is a pixel data value from the image frame 42. A wide variety of alternative correlation metrics may be employed. Sub-framing is performed in one embodiment by adjusting the ranges of the above summing functions for determining the correlation metrics 26.

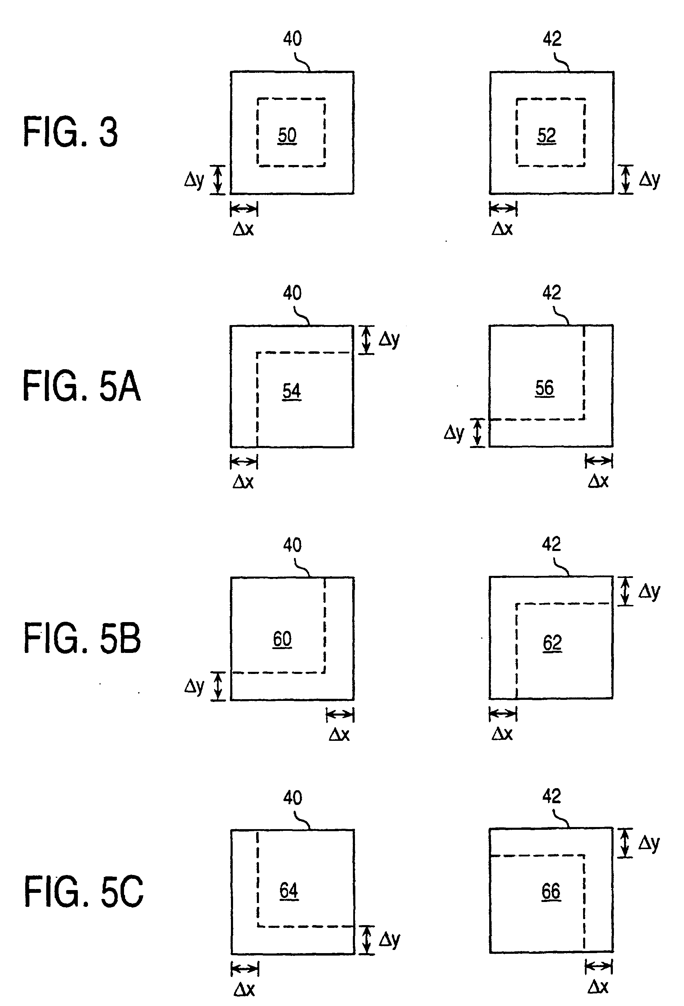

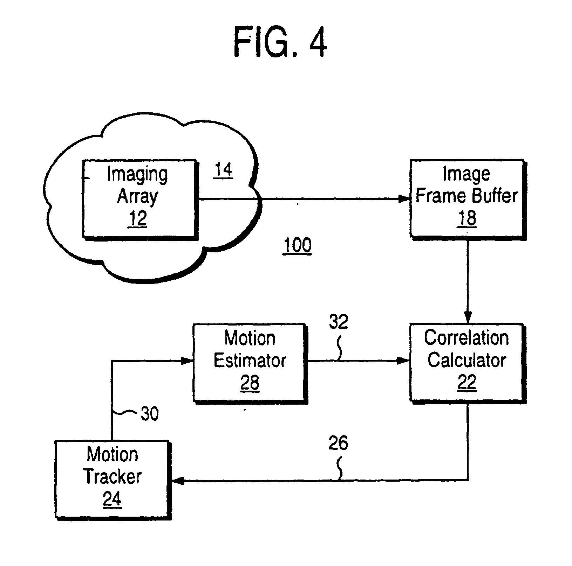

**Figure 3** illustrates a sub-frame operation on the image frames 40-42 in another embodiment. The correlation calculator 22 sub-frames the image frames 40-42 in this embodiment by using only the pixel data values-from an area 50 of the image frame 40 and an area 52 of the image frame 42 to determine the correlation metrics 26. The correlation calculator 22 eliminates the pixel data values that lie outside the areas 50-52 as defined by the $\Delta x$ and $\Delta y$ dimensions of a border area of the image frames 40 and 42.

The $\Delta x$ and $\Delta y$ (delta-x and the delta-y) dimensions are preselected based upon a maximum at which the image frames 40-42 are likely to be offset from one another. In one embodiment, the sampling rate of the imaging array 12 is high enough to ensure that the maximum spacial offset between the image frames 40-42 is likely to be less than one pixel in each dimension. In this embodiment, the $\Delta x$ and $\Delta y$ border areas are set to equal the width of one pixel of the image frames 40-42.

With sub-framing defined by the areas 50-52, the correlation calculator 22 uses the following equation to determine the correlation metrics 26.

$$C_{1x,1y} = \sqrt{\sum_{i=1-\Delta x}^{N-\Delta x} \sum_{j=i-\Delta y}^{M-\Delta y} (p_{i,j} - q_{i-1x, j-1y})^2}$$

In alternative embodiments, the correlation calculator 22 may apply a windowing function to the image frames 40-42 to reduce or eliminate the contributions from pixels outside the areas 50-52 to the correlation metrics 26. Such a windowing function may be realized by multiplying the pixel data values of the image frames 40-42 with a top-hat or a cosine function. This would emphasize the contributions of the pixel data values near the centers of the areas 50-52 and minimize the pixel data values near the border areas of the image frames 40-42. However, such an embodiment requires that a great number of multiplication operations be undertaken for each pair of image frames being correlated. Such multiplication operations may slow down the overall speed of the imaging system 10.

**Figure 4** shows an imaging system 100 which uses motion estimation in sub-framing operations. The elements for accurate motion detection in the imaging system 100 include the imaging array 12, the image frame buffer 18, the correlation calculator 22 and the motion tracker 24, along with a motion estimator 28. These elements may.be implemented in a combination of hardware and software including, for example, an embedded processor and memory in the imaging system 100.

The imaging array 12 scans the image scene 14 and the image frame buffer 18 stores multiple scanned image frames sampled from the image scene 14. The correlation calculator 22 in the imaging system 100 obtains the image frames 40-42 from the image frame buffer 18 and generates the correlation metrics 26. The correlation calculator 22 performs a sub-framing operation on the image frames 40-42 in response to a motion estimate 32 generated by the motion estimator 28. The motion estimate 32 is an estimate of the spacial relationship between the image frames 40-42.

**Figures 5a-5h** show a variety of spatial relationships between the image frames 40-42 as may be indicated by the motion estimate 32 rendered by the motion estimator 28. Also shown are the areas of the image frames 40-42 that are used by the correlation calculator 22 for a sub-framing operation in response to the motion estimate 32.

**Figure 5a** shows the image frame 42 having a relative $+\Delta x$ offset and a $-\Delta y$ offset with respect to the image frame 40 as indicated by the motion estimate 32. A sub-frame 54 of the image frame 40 and a sub-frame 56 of the image frame 42 are used by the correlation calculator 22 to render the correlation metrics 26 in response to this motion estimate 32. The correlation calculator 22 eliminates the pixel data values that lie outside of the sub-frames 54 and 56 when calculating the correlation metrics 26.

**Figure 5b** shows the image frame 42 having a $-\Delta x$ offset and a $+\Delta y$ offset with respect to the image frame 40 which is indicated by the motion estimate 32. In response to this motion estimate 32, the correlation calculator 22 eliminates the pixel data values located outside of a sub-frame 60 of the image frame 40 and the pixel data values outside of a sub-frame 62 of the image frame 42 when calculating the correlation metrics 26.

**Figure 5c** shows the image frame 42 having a $+\Delta x$ offset and a $+\Delta y$ offset with respect to the image frame 40 as indicated by the motion estimate 32. In this example, the correlation calculator 22 eliminates the pixel data values outside of a sub-frame 64 of the image frame 40 and the pixel data values outside of a sub-frame 66 of the image frame 42 when calculating the correlation metrics 26.

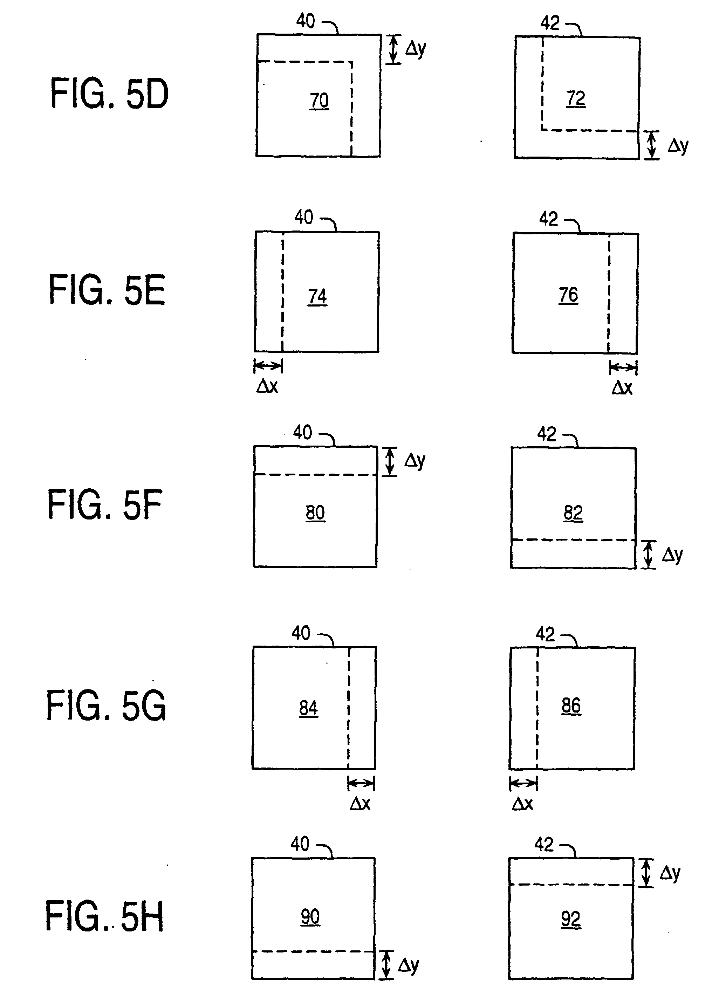

**Figure 5d** shows the image frame 42 having a $-\Delta x$ offset and a $-\Delta y$ offset with respect to the image frame 40 which is indicated by the motion estimate 32. In response, the correlation calculator 22 eliminates the pixel data values outside of a sub-frame 70 of the image frame 40 and the pixel data values outside of a sub-frame 72 of the image frame 42 when calculating the correlation metrics 26.

**Figure 5e** shows the image frame 42 having a $+\Delta x$ offset in relation to the image frame 40 as indicated by the motion estimate 32. In response to the $+\Delta x$ motion estimate 32, the correlation calculator 22 eliminates the pixel data values located outside of a sub-area 74 of the image frame 40 and the pixel data values outside of a sub-area 76 of the image frame 42 when calculating the correlation metrics 26.

**Figure 5f** shows the image frame 42 with a $-\Delta y$ offset relative to the image frame 40 as indicated by the motion estimate 32. In response, the correlation calculator 22 eliminates the pixel data values located outside of a sub-area 80 of the image frame 40 and the pixel data values located outside of a sub-area 82 of the image frame 42 when calculating the correlation metrics 26.

**Figure 5g** shows the image frame 42 having a $-\Delta x$ offset with respect to the image frame 40 as indicated by the motion estimate 32. The correlation calculator 22 eliminates the pixel data values outside of a sub-frame 84 of the image frame 40 and the pixel data values outside of a sub-frame 86 of the image frame 42 when calculating the correlation metrics 26 in response to this motion estimate 32.

**Figure 5h** shows the image frame 42 having a $+\Delta y$ offset with respect to the image frame 40 which is indicated by the motion estimate 32. The correlation calculator 22 eliminates the pixel data values located outside of a sub-frame 90 of the image frame 40 and the pixel data values located outside of a sub-frame 92 of the image frame 42 when calculating the correlation metrics 26.

The motion estimator 28 obtains a series of motion vectors 30 from the motion tracker 24. The motion vectors 30 indicate the relative spacial offsets, with sub-pixel resolution, of successive pairs of image frames sampled by the imaging array 12 as it moves with respect to, the image scene 14. The motion estimator 28 logs a history of the motion vectors and uses this history to generate the motion estimate 32. In one embodiment, the motion estimator 28 applies a Kalman filter function to the motion vectors 30 to predict the motion estimate 32.

In general, the motion estimate 32 is based upon the likely continuation of previous motion because abrupt and rapid changes in movement of the imaging array 12 with respect to the image scene 14 are unlikely in many applications. For example, if the imaging array 12 is contained in a handheld scanner, then the motion estimate 32 prediction is based upon a continuation of the previous motion of the handheld scanner as indicated by the history of the motion vectors 30.

In one embodiment, the sampling rate of the imaging array 12 is high enough to ensure that the maximum offset between the image frames 40-42 is one pixel given the likely rates at which the imaging array 12 may be moved with respect to the image scene 14. As a consequence, the maximum possible spatial offsets between the image frames 40-42 include only the following.

| lx | ly |
|----|----|
| 0 | 0 |
| 0 | 1 |
| 0 | -1 |
| 1 | 0 |
| 1 | 1 |
| 1 | -1 |
| - 1 | 0 |
| - 1 | 1 |
| - 1 | -1 |

The correlation metrics 26 computed by the correlation calculator 22 for the image frames 40-42 include nine correlation values - $C_{0,0}$, $C_{0,1}$, $C_{0,-1}$, $C_{1,0}$, $C_{1,1}$, $C_{1,-1}$, $C_{-1,0}$, $C_{-1,1}$, and $C_{-1,-1}$ which correspond to these nine possible spatial relationships between the image frames 40-42. The motion tracker 24 fits these nine correlation values to a three-dimensional surface and then determines the minimum of the surface. The position of this minimum is described by a two-dimensional vector that indicates the actual spatial relationship between the image frames 40-42 with sub-pixel resolution. A series of these minima generated by the motion tracker 24 for successive pairs of image frames provides the series of motion vectors 30 for the motion estimator 28.

The nine correlation values $C_{0,0}$, $C_{0,-1}$, $C_{0,-1}$, $C_{1,0}$, $C_{1,1}$, $C_{1,-1}$, $C_{-1,0}$, $C_{-1,1}$, and $C_{-1,-1}$ differ in the number of terms that are involved in their calculations due to differing alignments of the corresponding sub-frames. For example, the calculation of the correlation value $C_{0,1}$ involves fewer terms than the calculation of the correlation value $C_{0,0}$ because the sub-frames 80-82 used in the calculation of $C_{0,0}$ contain non-overlapping pixels as shown in **Figure 5f**. These differences in number of terms increase if lag values having a higher magnitude than 1 are used.

The difference in the number of terms involved in a square root of sum of squared differences calculation may be compensated by dividing each correlation value by a normalizing factor that accounts for the variation in the number of terms. Alternatively, the sub-frame areas used in calculating the correlation values may themselves be sub-framed so that all pairs of sub-frames involved in correlation calculations have the same number of terms in their correlation sums.for each lag value used.

The foregoing detailed description of the present invention is provided for the purposes of illustration and is not intended to be exhaustive c= to limit the invention to the precise embodiment disclosed. Accordingly, the scope of the present invention is defined by the appended claims.

**Claims**

1. A method for motion detection, comprising the steps of:

generating a pair of successive image frames (40-42) each containing a set of pixel data values sampled from the image scene (14);
determining an area (50, 52; 54, 56) of each of the image frames (40-42) that contain overlapping image content from the image scene (14) for each of a set of possible spatial relationships including partial overlap between the images frames (40-42);
calculating (22) a correlation metric (26) for each of the set of possible spatial relationships between the image frames (40-42)using the pixel data values exclusively from said areas of the image frames (40-42) that contain overlapping image content; and,
fitting the correlation metrics to a three-dimensional surface and determining the minimum of the surface to determine the relative motion (32) between said image frames (40-42) with sub-pixel resolution.

2. The method of claim 1, wherein the step of determining an area of each of the images frames (40-42) comprises the step of determining an area of each image frame such that the area is bounded by a border area having a delta-x dimension and a delta-y dimension.

3. The method of claim 2, wherein the delta-x and the delta-y dimensions are preselected based upon a maximum at which the image frames (40-42) are likely to be offset from one another.

4. The method of claim 3, wherein the delta-x and the delta-y dimensions each have a width which is less than or equal to a width of a pixel of the image frames (40-42).

5. The method of claim 1, wherein the step of calculating a correlation metric comprises the step of calculating a sum of squared differences between the pixel data values from each of the image frames (40-42) in the areas that contain overlapping image content.

6. The method of claim 1, wherein the step of determining an area of each of the image frames (40-42) comprises the steps of:

determining an estimate of a spatial relationship between the image frames (40-42); and,
selecting the area of each image frame based upon the estimate of the spatial relationship.

7. The method of claim 6, wherein the estimate of the spatial relationship is based upon past motion between image frames (40-42) sampled from the image scene (14).

8. An apparatus for motion detection, comprising:

means for generating a pair of successive image frames (40-42) each containing a set of pixel data values sampled from the image scene (14);

**characterised in that** the apparatus further comprises:

means for determining an area (50, 52; 54, 56) of each of the image frames (40-42) that contain overlapping image content from the image scene (14) for each of a set of possible spatial relationships including partial overlap between the image frames (40-42);
means (22) for calculating a correlation metric (26) for each of the set of possible spatial relationships between the image frames (40-42)using the pixel data values exclusively from said areas of the image frames (40-42) that contain overlapping image content such that correlation metrics enable a determination of a relative motion between the image frames (40-42); and,
means for fitting the correlation metrics to a three-dimensional surface and determining the minimum of the surface to determine the relative motion (32) between said image frames (40-42) with sub-pixel resolution.

9. The apparatus of claim 8, wherein the means for determining an area of each of the image frames (40-42) comprises means for determining an area of each image frame such that the area is bounded by a border area having a delta-x dimension and a delta-y dimension.

10. The apparatus of claim 9, wherein the delta-x and the delta-y dimensions are preselected based upon a maximum at which the image frames (40-42) are likely to be offset from one another.

11. The apparatus of claim 10, wherein the delta-x and the delta-y dimensions each have a width which is less than or equal to a width of a pixel of the image frames (40-42).

12. The apparatus of claim 8, wherein the means for calculating a correlation metric comprises means for determining a sum of squared differences between the pixel data values from each of the image frames (40-42) in the areas that contain overlapping image content.

13. The apparatus of claim 8, wherein the means for determining an area of each of the images frames (40-42) comprises:

   means for determining an estimate of a spatial relationship between the image frames (40-42);
   means for selecting the area of each image frame based upon the estimate of the spatial relationship.

14. The apparatus of claim 13, wherein the estimate of the spatial relationship is based upon past motion between image frames (40-42) sampled from the image scene (14).

15. The apparatus of claim 8, wherein:

   a correlation calculator (22) determines said area of each of a pair of image frames (40-42) containing overlapping image content from the image scene (14) dependent on each of a set of possible spatial relationships between the image frames (40-42), the correlation calculator (22) then determining said correlation metric; and
   a motion tracker (24) determines the relative motion between the image frames (40-42).

16. The system of claim 15, wherein the correlation calculator (22) determines said area of each of the image frames (40-42) by selecting an area of each image frame such that the area is bounded by a border having a delta-x dimension and a delta-y dimension.

17. The system of claim 16, wherein the delta-x and the delta-y dimensions are preselected based upon a maximum at which the image frames (40-42) are likely to be offset from one another.

18. The system of claim 17, wherein the delta-x and the delta-y dimensions each have a width which is less than or equal to a width of a pixel of the image frames (40-42).

19. The system of claim 15, wherein the correlation calculator (22) determines a correlation metric by calculating a sum of squared differences between the pixel data values from each of the image frames (40-42) in the areas that contain overlapping image content.

20. The system of claim 15, further comprising a motion estimator (28) that determines an estimate of a spatial relationship between the image frames (40-42) such that the correlation calculator (22) selects the area of each image frame based upon the estimate of the spatial relationship.

21. The system of claim 20, wherein the estimate of the spatial relationship is based upon past motion between image frames (40-42) sampled from the image scene (14).


**Patentansprüche**

1. Ein Verfahren zur Bewegungserfassung, mit folgenden Schritten:

   Erzeugen eines Paars aufeinanderfolgender Bildrahmen (40 - 42), wobei jeder derselben einen Satz von Pixeldatenwerten enthält, die aus der Bildszene (14) abgetastet werden;

   Bestimmen eines Bereichs (50, 52; 54, 56) jedes der Bildrahmen (40 - 42), die einen überlappenden Bildinhalt aus der Bildszene (14) enthalten, für jede eines Satzes möglicher räumlicher Beziehungen, einschließlich einer Teilüberlappung zwischen den Bildrahmen (40 - 42);

Berechnen (22) einer Korrelationsmetrik (26) für jede des Satzes möglicher räumlicher Beziehungen zwischen den Bildrahmen (40 - 42) unter Verwendung der Pixeldatenwerte ausschließlich von den Bereichen der Bildrahmen (40 - 42), die einen überlappenden Bildinhalt enthalten; und

Anpassen der Korrelationsmetriken an eine dreidimensionale Oberfläche und Bestimmen des Minimums der Oberfläche zur Bestimmung der relativen Bewegung (32) zwischen den Bildrahmen (40 - 42) mit einer Teilpixelauflösung.

**2.** Das Verfahren gemäß Anspruch 1, bei dem der Schritt des Bestimmens eines Bereichs jedes der Bilderrahmen (40 - 42) den Schritt eines Bestimmens eines Bereichs jedes Bildrahmens aufweist, derart, daß der Bereich durch einen Grenzbereich begrenzt ist, der eine Delta-x-Abmessung und eine Delta-y-Abmessung aufweist.

**3.** Das Verfahren gemäß Anspruch 2, bei dem die Delta-x- und die Delta-y-Abmessung basierend auf einem Maximum, um das die Bildrahmen (40 - 42) wahrscheinlich voneinander versetzt sind, vorausgewählt werden.

**4.** Das Verfahren gemäß Anspruch 3, bei dem die Delta-x- und die Delta-y-Abmessung jeweils eine Breite aufweisen, die kleiner oder gleich einer Breite eines Pixels der Bildrahmen (40 - 42) ist.

**5.** Das Verfahren gemäß Anspruch 1, bei dem der Schritt des Berechnens einer Korrelationsmetrik den Schritt eines Berechnens einer Summe quadrierter Differenzen zwischen den Pixeldatenwerten aus jedem der Bildrahmen (40 - 42) in den Bereichen, die einen überlappenden Bildinhalt enthalten, aufweist.

**6.** Das Verfahren gemäß Anspruch 1, bei dem der Schritt des Bestimmens eines Bereichs jedes der Bildrahmen (40 - 42) folgende Schritte aufweist:

Bestimmen eines Schätzwerts einer räumlichen Beziehung zwischen den Bildrahmen (40 - 42); und

Auswählen des Bereichs jedes Bildrahmens basierend auf dem Schätzwert der räumlichen Beziehung.

**7.** Das Verfahren gemäß Anspruch 6, bei dem der Schätzwert der räumlichen Beziehung auf einer vergangenen Bewegung zwischen Bildrahmen (40 - 42) basiert, die aus der Bildszene (14) abgetastet werden.

**8.** Eine Vorrichtung zur Bewegungserfassung, mit folgendem Merkmal:

einer Einrichtung zum Erzeugen eines Paars aufeinanderfolgender Bildrahmen (40 - 42), wobei jeder derselben einen Satz von Pixeldatenwerten enthält, die aus der Bildszene (14) abgetastet werden;

**dadurch gekennzeichnet, daß** die Vorrichtung ferner folgende Merkmale aufweist:

eine Einrichtung zum Bestimmen eines Bereichs (50, 52; 54, 56) jedes der Bildrahmen (40 - 42), die einen überlappenden Bildinhalt aus der Bildszene (14) enthalten, für jede eines Satzes möglicher räumlicher Beziehungen, einschließlich einer Teilüberlappung zwischen den Bildrahmen (40 - 42);

eine Einrichtung (22) zum Berechnen einer Korrelationsmetrik (26) für jede des Satzes möglicher räumlicher Beziehungen zwischen den Bildrahmen (40 - 42) unter Verwendung der Pixeldatenwerte ausschließlich von den Bereichen der Bildrahmen (40 - 42), die einen überlappenden Bildinhalt enthalten, derart, daß Korrelationsmetriken eine Bestimmung einer relativen Bewegung zwischen den Bildrahmen (40 - 42) ermöglichen; und

eine Einrichtung zum Anpassen der Korrelationsmetriken an eine dreidimensionale Oberfläche und Bestimmen des Minimums der Oberfläche zur Bestimmung der relativen Bewegung (32) zwischen den Bildrahmen (40 - 42) mit einer Teilpixelauflösung.

**9.** Die Vorrichtung gemäß Anspruch 8, bei der die Einrichtung zum Bestimmen eines Bereichs jedes der Bildrahmen (40 - 42) eine Einrichtung zum Bestimmen eines Bereichs jedes Bildrahmens aufweist, derart, daß der Bereich durch einen Grenzbereich begrenzt ist, der eine Delta-x-Abmessung und eine Delta-y-Abmessung aufweist.

**10.** Die Vorrichtung gemäß Anspruch 9, bei der die Delta-x- und die Delta-y-Abmessung basierend auf einem Maximum, um das die Bildrahmen (40 - 42) wahrscheinlich voneinander versetzt sind, vorausgewählt sind.

**11.** Die Vorrichtung gemäß Anspruch 10, bei der die Delta-x- und die Delta-y-Abmessung jeweils eine Breite aufweisen, die kleiner oder gleich einer Breite eines Pixels der Bildrahmen (40 - 42) ist.

**12.** Die Vorrichtung gemäß Anspruch 8, bei der die Einrichtung zum Berechnen einer Korrelationsmetrik eine Einrichtung zum Bestimmen einer Summe quadrierter Differenzen zwischen den Pixeldatenwerten aus jedem der Bildrahmen (40 - 42) in den Bereichen, die einen überlappenden Bildinhalt enthalten, aufweist.

**13.** Die Vorrichtung gemäß Anspruch 8, bei der die Einrichtung zum Bestimmen eines Bereichs jedes der Bilderrahmen (40 - 42) folgende Merkmale aufweist:

eine Einrichtung zum Bestimmen eines Schätzwerts einer räumlichen Beziehung zwischen den Bildrahmen (40 - 42); und

eine Einrichtung zum Auswählen des Bereichs jedes Bildrahmens basierend auf dem Schätzwert der räumlichen Beziehung.

**14.** Die Vorrichtung gemäß Anspruch 13, bei der der Schätzwert der räumlichen Beziehung auf einer vergangenen Bewegung zwischen Bildrahmen (40 - 42), die aus der Bildszene (14) abgetastet werden, basiert.

**15.** Die Vorrichtung gemäß Anspruch 8, bei der:

eine Korrelationsberechnungseinrichtung (22) den Bereich jedes eines Paars von Bildrahmen (40 - 42), die einen überlappenden Bildinhalt aus der Bildszene (14) enthalten, abhängig von jedem eines Satzes möglicher räumlicher Beziehungen zwischen den Bildrahmen (40 - 42) bestimmt, wobei die Korrelationsberechnungseinrichtung (22) dann die Korrelationsmetrik bestimmt; und

eine Bewegungsverfolgungseinrichtung (24) die relative Bewegung zwischen den Bildrahmen (40 - 42) bestimmt.

**16.** Das System gemäß Anspruch 15, bei dem die Korrelationsberechnungseinrichtung (22) den Bereich jedes der Bildrahmen (40 - 42) durch ein Auswählen eines Bereichs jedes Bildrahmens derart bestimmt, daß der Bereich durch eine Grenze begrenzt ist, die eine Delta-x-Abmessung und eine Delta-y-Abmessung aufweist.

**17.** Das System gemäß Anspruch 16, bei dem die Delta-x- und die Delta-y-Abmessung basierend auf einem Maximum, um das die Bildrahmen (40 - 42) wahrscheinlich voneinander versetzt sind, vorausgewählt sind.

**18.** Das System gemäß Anspruch 17, bei dem die Delta-x- und die Delta-y-Abmessung jeweils eine Breite aufweisen, die kleiner oder gleich einer Breite eines Pixels der Bildrahmen (40 - 42) ist.

**19.** Das System gemäß Anspruch 15, bei dem die Korrelationsberechnungseinrichtung (22) eine Korrelationsmetrik durch ein Berechnen einer Summe quadrierter Differenzen zwischen den Pixeldatenwerten aus jedem der Bildrahmen (40 - 42) in den Bereichen, die einen überlappenden Bildinhalt enthalten, bestimmt.

**20.** Das System gemäß Anspruch 15, das ferner eine Bewegungsschätzeinrichtung (28) aufweist, die einen Schätzwert einer räumlichen Beziehung zwischen den Bildrahmen (40 - 42) derart bestimmt, daß die Korrelationsberechnungseinrichtung (22) den Bereich jedes Bildrahmens basierend auf dem Schätzwert der räumlichen Beziehung auswählt.

**21.** Das System gemäß Anspruch 20, bei dem der Schätzwert der räumlichen Beziehung auf einer vergangenen Bewegung zwischen Bildrahmen (40 - 42), die aus der Bildszene (14) abgetastet werden, basiert.

**Revendications**

**1.** Procédé pour la détection de mouvement, comprenant les étapes consistant à :

générer une paire de cadres d'images successifs (40-42) chacun contenant un ensemble de valeurs de données de pixel échantillonnées à partir de la scène d'image (14) ;

déterminer une zone (50, 52 ; 54, 56) de chacun des cadres d'image (40-42) qui comprend un contenu d'images en superposition depuis la scène d'image (14) pour chaque relation d'un ensemble de relations spatiales possibles y compris une superposition partielle entre les cadres d'image (40-42) ;

calculer (22) une matrice de corrélation (26) pour chaque relation de l'ensemble de relations spatiales possibles entre les cadres d'image (40-42) en utilisant les valeurs de données de pixel exclusivement à partir desdites zones de cadres d'image (40-42) qui comprennent un contenu d'images en superposition ; et

adapter la matrice de corrélation à une surface à 3 dimensions et déterminer le minimum de la surface afin de déterminer le mouvement relatif (33) entre lesdits cadres d'image (40-42) avec une résolution inférieure au pixel.

2.  Procédé selon la revendication 1, dans lequel l'étape de détermination d'une surface de chacun des cadres d'image (40-42) comprend l'étape consistant à déterminer une zone de chaque cadre d'image de sorte que la zone soit entourée par une zone de frontière ayant une dimension delta-x et une dimension delta-y.

3.  Procédé selon la revendication 2, dans lequel les dimensions delta-x et delta-y sont présélectionnées sur la base d'un maximum auquel les cadres d'image (40-42) sont susceptibles d'être décalés l'un par rapport à l'autre.

4.  Procédé selon la revendication 3, dans lequel les dimensions delta-x et delta-y ont chacune une largeur qui est inférieure ou égale à la largeur d'un pixel des cadres d'image (40-42).

5.  Procédé selon la revendication 1, dans lequel l'étape consistant à calculer une matrice de corrélation comprend l'étape consistant à calculer une somme des différences au carré entre les valeurs de données de pixel depuis chaque cadre d'image (40-42) dans les zones qui comprennent un contenu d'images en superposition.

6.  Procédé selon la revendication 1, dans lequel l'étape consistant à déterminer une zone de chaque cadre d'image (40-42) comprend les étapes consistant à :

déterminer une estimation de la relation spatiale entre les cadres d'image (40-42) ; et
sélectionner la zone de chaque cadre d'image sur la base de l'estimation de la relation spatiale.

7.  Procédé selon la revendication 6, dans lequel l'estimation de la relation spatiale est basée sur le dernier mouvement entre les cadres d'image (40-42) échantillonnés à partir de la scène d'image (14).

8.  Appareil pour la détection de mouvement, comprenant :

des moyens pour générer une paire de cadres d'images successifs (40-42) chacun contenant un ensemble de valeurs de données de pixel échantillonnées à partir de la scène d'image (14) ;

**caractérisé en ce que** l'appareil comprend en outre :

des moyens pour déterminer une zone (50, 52 ; 54, 56) de chacun des cadres d'image (40, 42) qui comprennent un contenu d'images se superposant depuis la scène d'image (14) pour chaque ensemble de relations spatiales possibles, y compris la superposition partielle entre les cadres d'image (40-42) ;
des moyens (22) pour calculer une matrice de corrélation (26) pour chaque relation de l'ensemble de relations spatiales possibles entre les cadres d'image (40-42) en utilisant les valeurs de données de pixel exclusivement à partir desdites zones des cadres d'images (40-42) qui comprennent un contenu d'image en superposition de sorte que les matrices de corrélation permettent la détermination d'un mouvement relatif entre les cadres d'image (40-42) ; et
des moyens pour adapter les matrices de corrélation à une surface à 3 dimensions et déterminer le minimum de la surface afin de déterminer le mouvement relatif (32) entre lesdits cadres d'image (40-42) avec une résolution inférieure au pixel.

9.  Appareil selon la revendication 8, dans lequel les moyens pour déterminer une zone de chacun des cadres d'image (40-42) comprennent des moyens pour déterminer une zone de chaque cadre d'image de sorte que la zone soit limitée par une zone frontière ayant une dimension delta-x et une dimension delta-y.

10. Appareil selon la revendication 9, dans lequel les dimensions delta-x et delta-y sont présélectionnées sur la base d'un maximum auquel les cadres d'images (40-42) se décaleront vraisemblablement l'un par rapport à l'autre.

**11.** Appareil selon la revendication 10, dans lequel les dimensions delta-x et delta-y ont chacune une largeur qui est inférieure ou égale à la largeur d'un pixel des cadres d'image (40-42).

**12.** Appareil selon la revendication 8, dans lequel les moyens pour calculer une métrique de corrélation comprennent des moyens pour déterminer une somme de différences au carré entre les valeurs de données pixel depuis chacun des cadres d'image (40-42) dans les zones qui comprennent un contenu d'images se superposant.

**13.** Appareil selon la revendication 8, dans lequel les moyens pour déterminer une zone de chacun des cadres d'images (40-42) comprennent :

des moyens pour déterminer une estimation d'une relation spatiale entre les cadres d'images (40-42),
des moyens pour sélectionner la zone de chaque cadre d'image sur la base de l'estimation de la relation spatiale.

**14.** Appareil selon la revendication 13, dans lequel l'estimation de la relation spatiale est basée sur le dernier mouvement entre les cadres d'images (40-42) échantillonnés à partir de la scène d'image (14).

**15.** Appareil selon la revendication 8, dans lequel :

un calculateur de corrélation (22) détermine ladite zone de chaque paire de cadres d'image (40-42) comprenant un contenu d'image se superposant à partir d'une scène d'image (14) dépendant de chacun des ensembles de relations possibles entre les cadres d'images (40-42), le calculateur de corrélation (22) en déterminant ainsi ladite métrique de corrélation, et
un traceur de mouvement (24) déterminant le mouvement relatif entre les cadres d'images (40-42).

**16.** Système selon la revendication 15, dans lequel le calculateur de corrélation (22) détermine ladite zone de chacun des cadres d'images (40-42) en sélectionnant une zone de chaque cadre d'image de sorte que la zone est limitée par une frontière ayant une dimension delta-x et une dimension delta-y.

**17.** Système selon la revendication 16, dans lequel les dimensions delta-x et delta-y sont présélectionnées sur la base d'un maximum auquel les cadres d'images (40-42) sont vraisemblablement décalés l'un par rapport à l'autre.

**18.** Système selon la revendication 17, dans lequel les dimensions delta-x et delta-y ont chacune une largeur qui est inférieure ou égale à la largeur d'un pixel des cadres d'image (40-42).

**19.** Système selon la revendication 15, dans lequel le calculateur de corrélation (22) détermine une métrique de corrélation en calculant une somme de différences au carré entre les valeurs de données de pixel pour chacun des cadres d'image (40-42) dans les zones comprenant un contenu d'image en superposition.

**20.** Système selon la revendication 15, comprenant en outre un estimateur de mouvement (28) qui détermine une estimation d'une relation spatiale entre les cadres d'image (40-42) de sorte que le calculateur de corrélation (22) sélectionne la zone de chaque cadre d'imagé en se basant sur l'estimation de la relation spatiale.

**21.** Système selon la revendication 20, dans lequel l'estimation des relations spatiales est basée sur le dernier mouvement entre des cadres d'image (40-42) échantillonnés à partir de la scène d'image (14).

# FIG. 1

# FIG. 2

FIG. 3

40

50

Δy

Δx

42

52

Δy

Δx

FIG. 5A

40

Δy

54

Δx

42

56

Δy

Δx

FIG. 5B

40

60

Δy

Δx

42

Δy

62

Δx

FIG. 5C

40

64

Δy

Δx

42

Δy

66

Δx

# FIG. 4

FIG. 5D

40

Δy

70

42

72

Δy

FIG. 5E

40

74

42

76

Δx

Δx

FIG. 5F

40

Δy

80

42

82

Δy

FIG. 5G

40

84

42

86

Δx

Δx

FIG. 5H

40

90

Δy

42

Δy

92